Europäisches Patentamt

European Patent Office

Office européen des brevets

(11) Publication number: **0 108 832**
A1

# (12) EUROPEAN PATENT APPLICATION

(21) Application number: 82110580.6

(51) Int. Cl.³: **B 62 K 15/00**

(22) Date of filing: 16.11.82

(43) Date of publication of application: 23.05.84
Bulletin 84/21

(84) Designated Contracting States: **AT BE CH DE FR GB IT LI LU NL SE**

(71) Applicant: **BRIDGESTONE CYCLE CO., LTD.,**
**No. 5-14, 3-chome, Nihonbashi, Chuo-Ku Tokyo (JP)**

(72) Inventor: **Takamiya, Kikuzo, Kitamoto-City,**
**Saitama-Prefecture (JP)**
Inventor: **Ishibashi, Hideyuki, Ageo-City,**
**Saitama-Prefecture (JP)**

(74) Representative: **Patentanwälte Liedl, Nöth,**
**Steinsdorfstrasse 21-22, D-8000 München 22 (DE)**

(54) Frame for folding bicycle.

(57) A frame for a holding bicycle comprising: a base frame having a triangular side elevation arranged such that a hanger pipe 2 and a hanger bracket 3 are provided at the lower end of a main pipe 1, while a front bracket 6 is provided at the upper end, and said hanger bracket 3 and a rear end member 8 as well as said front bracket 6 and said rear end member 8 are connected with a pair of back forks 9 and a pair of lower stays 10 respectively; a quadric limited link frame arranged such that the lower end of a seat pipe 11 is rotatably attached to a shaft 5 provided to said hanger bracket 3 provided at the upper end of said main pipe 1 defining one side of said base frame having a triangular side elevation, while an upper bracket 13 is provided near the upper end of said seat pipe 11, and the lower end of a front pipe 15 is rotatably attached to a shaft 7 provided to said front bracket 6 provided at the lower end of said main pipe 1, while a head bracket 17 is provided close to the upper end of said front pipe 15, and shafts 14, 18 provided to said upper bracket 13 and said head bracket 17 respectively are connected with an upper stay 20, thereby to foldably constitute said quadric limited link frame from said main pipe 1, said seat pipe 11, said upper stay 20 and said front pipe 15; and a link engaged between proper components of said quadric limited link frame and adapted to be bendable and stretchable in order to allow said quadric limited link frame to be unfolded or folded.

DETAILED DESCRIPTION OF THE INVENTION

The present invention relates to a frame for a folding bicycle and more particularly to the arrangement of frame components for allowing the bicycle to be instantaneously unfolded or folded as well as the frame weight to be made as light as possible in order to facilitate carrying of the bicycle being folded.

Folding bicycle frames have mechanisms for fold. Conventional folding bicycle frames, however, have such problems that operation for unfolding, particularly folding, is troublesome and the frame weight increases as well.

It is, therefore, an object of the present invention to provide a bicycle frame structure including as a base a base frame with a frame structure which is triangular when viewed sideways and a quadric limited link frame assembled thereon and adapted to be unfoldable or foldable in order to facilitate the folding operation and moreover employing mainly pipe material in order to decrease the frame weight, wherein frames are disposed so that buckling is prevented as much as possible and particularly tension is applied to a long frame, which is large in weight, thereby to reduce the frame weight without damaging the strength.

A preferred embodiment of the present invention will be described hereinunder with reference to the accompanying drawings. A hanger pipe 2 and a pair of hanger brackets 3 are provided at the lower end of a main pipe 1, while a front bracket 6 is provided at the upper end. Here, the upper ends of the hanger brackets 3 and a rear end member 8 are connected with a back fork 9 and moreover, the front bracket 6 and the rear end member 8 are connected with a pair of lower stays 10, thereby to form a base frame which is triangular when viewed sideways. With the main pipe 1 defining one side of the triangle as a base, a shaft 5 is provided through the hanger brackets 3 provided at the upper end of the main pipe 1, and the lower end of a seat pipe 11 is rotatably connected to the shaft 5. The upper end of the seat pipe 11 has a seat post fastening part 12 for mounting a saddle, and an upper bracket 13 is provided near the upper end of the seat pipe 11. In addition, a shaft 7 is also provided through the front bracket 6 at the lower end of the main pipe 1, and the lower end of the
front pipe 15 is rotatably connected to the shaft
7. A head pipe 16 to hold a handle-bar post and
a front fork is secured to the upper end of the
front pipe 15, and a head bracket 17 for
scattering the stress applied to the securing part
is provided extending over the head pipe 16 and
the upper end of the front pipe 15. Shafts 14,
18 provided through the upper bracket 13 and the
head bracket 17 respectively are connected with an
upper stay 20 to form a quadric limited link frame
capable of being folded at four joints between the
main pipe 1, the seat pipe 11, the upper stay 20
and the front pipe 15 respectively. In addition,
a link adapted to be bendable and stretchable is
engaged between proper components of the quadric
limited link frame so that it can be unfolded or
folded.

In the present invention, the link is
diagonally disposed between the head bracket 17
and the hanger brackets 3 in the members
constituting the quadric limited link frame, and
the link is adapted to be bendable and stretchable
in order to facilitate unfolding and folding of
the quadric limited link frame. Consequently, a shaft 19 is provided through the head bracket 17, and one end of a link A21 is pivotably attached to the shaft 19. The link A21 has a stepped part 22 with a diameter a size larger than that of the main body. A shaft 4 is also provided through the hanger brackets 3, and one end of a link B23 is pivotably attached to the shaft 4. Here, a folding shaft 24 is provided through the other ends of the respective links A21 and B23 so that the links A21 and B23 are stretchable with the shaft 24 as a pivoting center. A support collar 25 extending over both the links A21 and B23 is slidably disposed, and a compression spring 26 is loaded on the side of the link B23 so as to constantly press the support collar 25 toward the stepped part 22 of the link A21. In the preferred embodiment of the present invention, the shafts 18, 19 are separately provided to the head bracket 17. However, these shafts may be the same. On the other hand, the positions of the shafts 4, 19 are selected so that the line of action of the compression force at the position of the shaft 4 and that at the position of the shaft 19 face to each other on the same line, thereby to allow only the force in the axial direction of the link to be applied to the folding shaft 24 of the link as much as possible. By covering the outside of the compression spring 26 with a coating material, durability is improved and also safety is ensured.

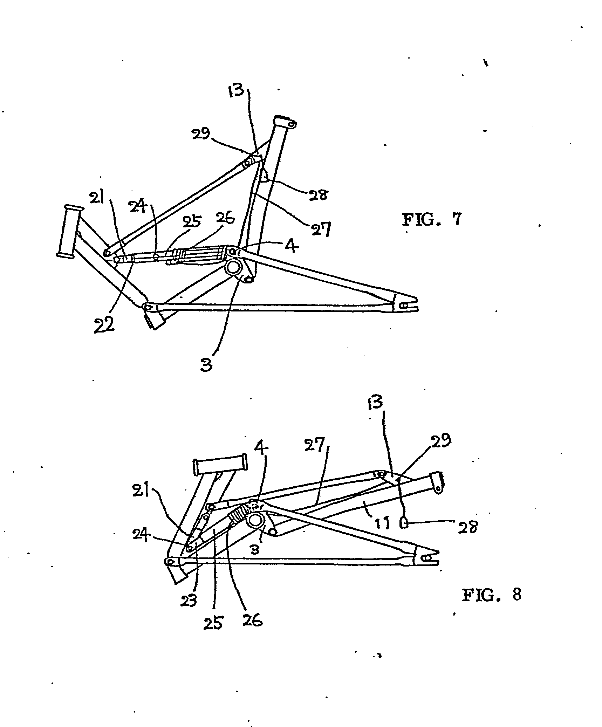

Another preferred embodiment is such that, as shown in Figs. 7 and 8, in order to allow the slide of the support collar 25 to be remotely controlled, one end of a cord 27 is connected to a portion of the support collar 25. The cord 27 is once passed below the axial central line of the link, then passed under the position of the shaft 4 of the hanger brackets 3 and inserted through a receiving bore 29 provided in the upper end part of the seat pipe 11, e.g., in the upper bracket 13, and a tag 28 is connected to the open end of the cord 27.

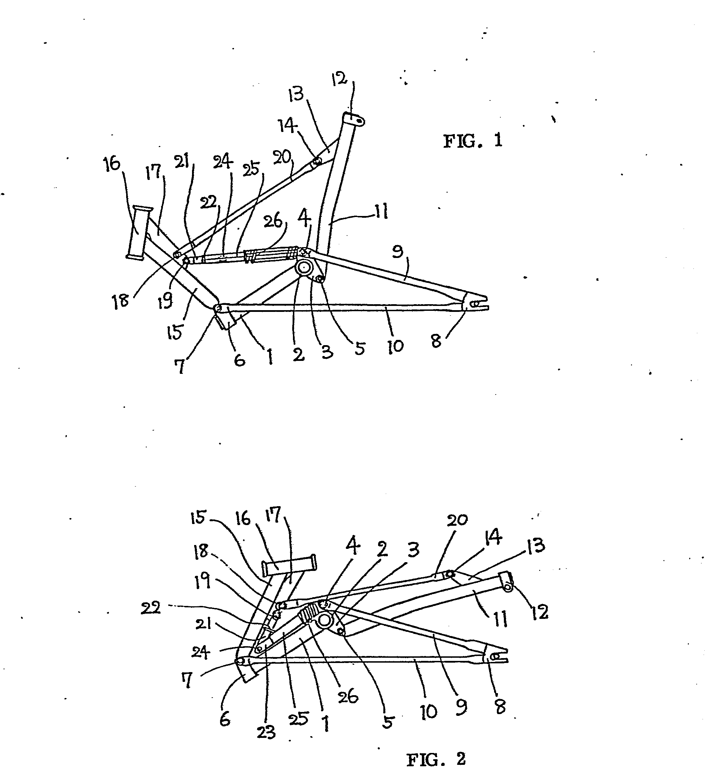

Since the present invention has such arrangement as described above, the quadric limited link frame is unfolded or folded with the triangular base frame as a base. In the quadric limited link frame, the support collar 25 is disposed on the links A21 and B23 in the link diagonally inserted between the hanger brackets 3 and the head bracket 17, and the support collar 25 is resiliently brought into contact with the stepped part 22 of the link A21 by means of the compression spring 26 at all times and moreover; the support collar 25 covers the periphery of the joint between the links A21 and B23 including the folding shaft 24. Therefore, the links A21 and B23 cannot bend and consequently form a beam to secure the quadric limited link frame in an unfolded state. Removing the securing for the unfolded state of the quadric limited link frame permits the frame to be folded in such a direction that the seat pipe 11 is rearward inclined as shown in Fig. 2.

Accordingly, when the support collar 25 is slid toward the side of the shaft 4 against the compression spring 26 so that the joint between the links A21 and B23 is exposed and moreover a force for moving the folding shaft 24 toward the shaft 7 is applied in order to remove the securing for the unfolded state of the quadric limited link frame, the links A21 and B23 are folded in two as shown in Fig. 2 and also the quadric link is forcedly brought into a folded state.

In case of remote-controlling the slide of the support collar 25 according to the second-mentioned preferred embodiment, since the cord 27 is once passed below the axial central line of the link, the force applied to the support collar 25 when the cord 27 is pulled acts not only in the direction of making the support collar 25 slide toward the shaft 4 against the compression spring 26 but also in the direction of making the link move downward although it is a slight extent. Accordingly, the links A21 and B23 can be folded in two simply by pulling the tag 28 attached to the cord 27, and the frame is folded therewith.

Accordingly, the present invention can be folded extremely simply by sliding the support collar 25 and pressing the link and the like so that the folding shaft 24 moves downward. Moreover, since the present invention is constituted so that a tensile load is mainly applied to a long member such as the lower stays 10 and the upper stay 20 in order to prevent buckling, it is possible to reduce the sectional area of such member correspondingly and decrease the weight of the frame.

As the result of the second-mentioned preferred embodiment, since the receiving bore 29 for the cord 27 is provided in the upper bracket 13 in the upper part of the seat pipe 11, it is unnecessary to slide the support collar 25 directly with the hand.    Therefore, there is no possiblity that the finger is nipped between the components, and it also becomes possible to fold the bicycle by pulling the tag 28 in a getting-off posture from the bicycle.

As will be fully understood from the foregoing description, according to the present invention, it is possible to provide a frame for a folding bicycle capable of being simply unfolded and folded as well as reducing the frame weight without damaging the strength.

BRIEF DESCRIPTION OF THE DRAWINGS

Fig. 1 is an elevational view of a frame for a folding bicycle according to the present invention;

Fig. 2 is an elevational view of the frame in a folded state;

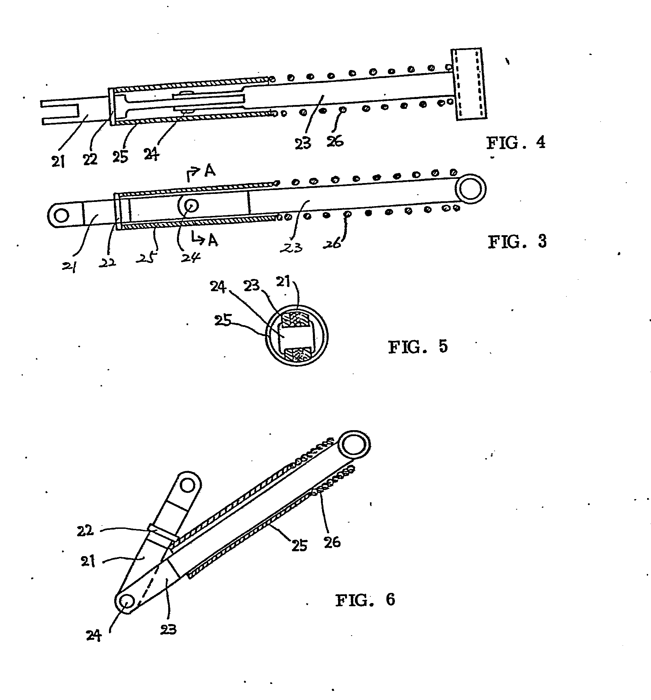

Fig. 3 is a partly sectioned elevational view of a link;

Fig. 4 is a partly sectioned elevational view of the link;

Fig. 5 is a sectional view taken along the line A-A of the Fig. 3;

Fig. 6 is a partly sectioned side elevational view of the link being folded in two;

Fig. 7 is an elevational view of another preferred embodiment; and

Fig. 8 is an elevational view of the second-mentioned preferred embodiment in a folded state.

In the Figures,

  1: main pipe

  2: hanger pipe

  3: hanger bracket

  4: shaft

  5: shaft

  6: front bracket

  7: shaft

  8: rear end member

  9: back fork

10: lower stay

11: seat pipe

12: seat post fastening part

13: upper bracket

14: shaft

15: front pipe

16: head pipe

17: head bracket

18: shaft

19: shaft

20: upper stay

21: link A

22: stepped part

23: link B

24: folding shaft

25: support collar

26: compression spring

27: cord

28: tag

29: receiving bore

0108832

CLAIMS

(1) A frame for a folding bicycle comprising: a base frame having a triangular side elevation arranged such that a hanger pipe 2 and a hanger bracket 3 are provided at the lower end of a main pipe 1, while a front bracket 6 is provided at the upper end, and said hanger bracket 3 and a rear end member 8 as well as said front bracket 6 and said rear end member 8 are connected with a pair of back forks 9 and a pair of lower stays 10 respectively; a quadric limited link frame arranged such that the lower end of a seat pipe 11 is rotatably attached to a shaft 5 provided to said hanger bracket 3 provided at the upper end of said main pipe 1 defining one side of said base frame having a triangular side elevation, while an upper bracket 13 is provided near the upper end of said seat pipe 11, and the lower end of a front pipe 15 is rotatably attached to a shaft 7 provided to said front bracket 6 provided at the lower end of said main pipe 1, while a head bracket 17 is provided close to the upper end of said front pipe 15, and shafts 14, 18 provided to said upper bracket 13 and said head bracket 17 respectively are connected with an upper stay 20, thereby to foldably constitute said quadric limited link frame from said main pipe 1, said seat pipe 11, said upper stay 20 and said front pipe 15; and a link engaged between proper components of said quadric limited link frame and adapted to be bendable and stretchable in order to allow said quadric limited link frame to be unfolded or folded.

(2) A link used in a frame for a folding bicycle as defined in claim 1, wherein a link A21 is rotatably supported by a shaft 19 of said head bracket 17, while a link B23 is rotatably supported by a shaft 4 of said hanger bracket 3, and said link A21 and said link B23 are rotatably connected by a folding shaft 24 and moreover, a support collar 25 extending over both said link A21 and said link B23 is slidably disposed.

(3) A link used in a frame for a folding bicycle as defined in claim 2, wherein the slide of said support collar 25 is made possible to remotely control by using a pulling member such as a cord 27 connected to said support collar 25.

FIG. 1

FIG. 2

2/3

0108832

FIG. 4

FIG. 3

FIG. 5

FIG. 6

0108832

FIG. 7

FIG. 8

## EUROPEAN SEARCH REPORT

European Patent
Office

### DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | GB-A-2 021 055 (HERBERT) <br> * Whole document * <br><br> --- | 1,2 | B 62 K 15/00 |
| A | AU-A- 503 065 (KLIMPSCH) <br> * Whole document * <br><br> --- | 1 | |
| A | EP-A-0 026 800 (BROMPTON BICYCLE) <br><br> ----- | | |

|  | TECHNICAL FIELDS SEARCHED (Int. Cl. ³) |
|---|---|
|  | B 62 K <br> F 16 C |

The present search report has been drawn up for all claims

| Place of search | Date of completion of the search | Examiner |
|---|---|---|
| THE HAGUE | 22-07-1983 | GEMMELL R.I.D. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO Form 1503. 03.82